# EUROPEAN PATENT APPLICATION

(11) **EP 2 481 297 A1**
(43) Date of publication of application: **01.08.2012**
(21) Application number: 12156252.4
(22) Date of filing: 09.09.2008
(51) Int. Cl.: A23L 1/237

(54) **Methods and compositions for reducing sodium content in food products**

(30) Priority: 06.02.2008 US 26531 P; 10.03.2008 US 35286 P
(62) Divisional of application: 08872041.2
(71) Applicant: Campbell Soup Company, Camden NJ 08103-1799 (US)
(72) Inventor: Vadlamani, Keswara Rao, Marlton, NJ 08103 (US); Friday, Dillon, Linwood, PA 19061 (US); Broska, Amy, Hamilton, NJ 08610 (US); Miller, Jared, Reno, TX 08610 (US)
(74) Representative: Kirkham, Nicholas Andrew

(57) **Abstract**

The invention provides compositions and methods for reformulating foodstuffs to reduce sodium content, while significantly enhancing salt perception and minimizing additional bitterness. The invention provides salt taste enhancing compositions including potassium chloride in combination with an organic acid and, optionally, an organic acid salt of potassium.

## Description

### RELATED APPLICATIONS

This application claims priority to and the benefit of U.S. provisional patent applications Serial Nos. 61/026,531, filed February 6, 2008, and 61/035,286, filed March 10, 2008, the disclosures of which are incorporated herein by reference in their entirety.

### FIELD OF THE INVENTION

This invention relates generally to reduced sodium processed foodstuffs. More particularly, in certain embodiments, the invention relates to methods and compositions for reducing sodium content in processed foodstuffs without significant loss of salty taste perception and with minimal additional bitterness.

### BACKGROUND OF THE INVENTION

Salt is added to processed and cooked foods to provide palatability and desirable salty taste. Sodium chloride is a major constituent of regular edible salt and comprises about 60% elemental chlorine and about 40 % elemental sodium. Sodium is an essential nutrient and is important in maintaining concentration and volume of extracellular fluid in the human body. However, excessive dietary sodium intake has long been suspected as a source of a number of health problems, such as hypertension.

The average daily intake of salt by adults in the United States is about 4-5 g (3900-4700 mg of sodium)/day, only a third of which comes from natural foods, with the remaining two thirds coming from salt added by the consumer or by manufacturers of foodstuffs to improve palatability. The U.S. Recommended Daily Allowance (RDA) of sodium is less than 2,400 mg, which is significantly lower than the current average daily intake. Thus, there is a need for formulations that achieve the taste of salted foods, but that have lower sodium content.

Several salt substitutes - both low-sodium and sodium-free compositions- have been proposed which contain a variety of constituents added in an attempt to mimic the salt perception and flavor of sodium chloride. Many of these are based on potassium chloride. However, potassium chloride produces a bitter, soapy, or otherwise negative taste and/or aftertaste. Some potassium chloride-based salt substitutes also contain hydrolyzed protein or 5'-nucleotides to improve flavor. However, there have been no cost-effective formulations that have been shown to perform well over a wide range of concentrations and in a wide variety of foodstuffs.

Salt substitutes have not been widely adopted by consumers. Furthermore, use of salt substitutes by U.S. manufacturers is not widespread, despite the long-recognized need for processed foodstuffs containing lower levels of sodium. There is clearly a need for better performing salt substitutes, and there is a need for reformulated processed foodstuffs that have reduced sodium content, but that also have satisfactory salty taste and minimal additional bitter (or otherwise negative) taste or aftertaste.

### SUMMARY

Embodiments of the present invention provide compositions and methods for reformulating processed foodstuffs to reduce sodium content, while significantly enhancing salt perception and minimizing additional bitterness. Experiments described herein demonstrate surprisingly high salt impact and overall flavor perception in foodstuffs reformulated for substantially reduced sodium content. The high salt impact is generally achieved without the negative taste attributes normally associated with processed foodstuffs containing potassium chloride-based salt substitutes.

Unlike conventional uses of potassium chloride, or combinations of sodium chloride and potassium chloride, experiments disclosed herein also show that pH and conductance of aqueous solutions formulated according to certain embodiments of the present invention closely mimic the pH and conductance of "control" sodium chloride aqueous solutions. Experiments involving foodstuffs further indicate an observed synergistic effect between sodium chloride and certain compositions in accordance with the invention. Various embodiments of the invention are shown to provide the salt impact of much greater perceived sodium chloride content. Indeed, embodiments of the present invention enhance the salty perception imparted by lowered amounts of sodium chloride in processed foodstuffs in such a way as to evoke salt impact equivalent to much greater levels of sodium chloride.

The pH and conductance experiments demonstrate the surprising effectiveness of compositions containing monopotassium phosphate (MKP) and/or monocalcium phosphate (MCP), or, in alternative embodiments, of lactic acid. Furthermore, the results show the effectiveness of the *combination* of (1) potassium chloride (KCl); (2) MKP (or MCP) or lactic acid; and (3) potassium citrate in matching pH and conductance of NaCl solutions over a wide range of concentrations.

The invention therefore provides foodstuffs containing the above-described compositions, and methods for preparing said foodstuffs. In various embodiments, the invention provides methods of reformulating processed foodstuffs with significantly reduced sodium levels, without substantially diminishing flavor. Satisfactory taste results are achieved for a wide variety of foodstuffs at significantly reduced sodium levels. Experiments show that satisfactory results are obtained even at sodium levels low enough to satisfy FDA "healthy" and "reduced sodium" product labeling regulations. In certain embodiments, the foodstuff is a soup, a beverage, a sauce, a bakery product or a meat product. The foodstuff may contain the specified components in dissociated and/or in non-dissociated form. In solid foodstuffs, the components are typically non-dissociated, and in liquid foodstuffs (e.g., soups), they are typically dissociated.

In certain embodiments, the invention provides salt taste enhancing compositions including a blend of three potassium salts - namely, potassium chloride, monopotassium phosphate, and potassium citrate - which, when used in conjunction with sodium chloride, significantly enhances the salt perception in reduced sodium chloride foods and beverages, while imparting no or limited bitter aftertaste. In certain embodiments, the salt taste enhancing blend is a dry salt blend. In other embodiments, the salt taste enhancing blend is a liquid.

In certain embodiments, the salt enhancer compositions include (i) potassium chloride, (ii) at least one monophosphate salt derived from potassium or calcium source or combination thereof, and (iii) one or more of the following: potassium citrate, dipotassium phosphate, tripotassium phosphate, tetrapotassium phosphate, potassium lactate, potassium acetate, potassium tartarate, and potassium formate. In further embodiments, the salt enhancer compositions include (i) potassium chloride, (ii) lactic acid or another organic acid, and (iii) one or more of the following: potassium citrate, dipotassium phosphate, tripotassium phosphate, tetrapotassium phosphate, potassium lactate, potassium acetate, potassium tartarate, and potassium formate. Furthermore, the present invention provides methods of using these compositions and methods for preparing them, as detailed herein.

It should be understood where "NaCl" or sodium chloride is specified herein, table salt and/or sea salt may be used.

In one aspect, the invention is directed to a method for manufacturing a processed foodstuff having a reduced sodium content with similar salt perception compared with a previous formulation of the foodstuff, the method including: (a) providing an adjusted amount of sodium chloride (NaCl) in the reformulated foodstuff, the adjusted amount of NaCl being less than the amount of NaCl in the previous formulation of the foodstuff; (b) providing potassium chloride (KCl) in the reformulated foodstuff; (c) providing a monophosphate salt in the reformulated foodstuff chosen from monopotassium phosphate (MKP) and monocalcium phosphate (MCP); and (d) providing in the reformulated foodstuff one or more of the following: potassium citrate, dipotassium phosphate, tripotassium phosphate, tetrapotassium phosphate, potassium lactate, potassium acetate, potassium tartarate, and potassium formate. In preferred embodiments, potassium citrate is provided in step (d).

In certain embodiments, the adjusted amount of NaCl is at least 25% less (on a weight basis) than the amount of NaCl used in the previous formulation. In other embodiments, the adjusted amount of NaCl is at least 15%, 20%, 30%, 35%, 40%, 45%, 50%, 55%, 60%, 65%, 70%, 75%, 80%, 85%, 90%, or 95% less than the amount of NaCl used in the previous formulation.

In certain embodiments, the foodstuff may also contain from about 0.005 to about 5 wt.% NaCl; from about 0.01 to about 2 wt.% NaCl, or from 0.1 wt% to about 1 wt % NaCl. In still other embodiments, the foodstuff contains no greater than about 2 wt.% NaCl, or no greater than about 1.5 wt.% NaCl; or no greater than about 1 wt.% NaCl, or no greater than about 0.75 wt.% NaCl; or no greater than about 0.6 wt.% NaCl, or no greater than about 0.50 wt.% NaCl, or no greater than about 0.40 wt.% NaCl; or no greater than about 0.35 wt.% NaCl, or no greater than about 0.30 wt.% NaCl; or no greater than about 0.25 wt.% NaCl, or no greater than about 0.20 wt.% NaCl; or no greater than about 0.15 wt.% NaCl, or no greater than about 0.10 wt.% NaCl; or no greater than about 0.05 wt.% NaCl, or no greater than about 0.01 wt.% NaCl.

In certain embodiments, the reformulated foodstuff contains (or, if in condensed form, the foodstuff diluted per labeled instructions contains) no greater than 480 mg sodium per reference amount of the foodstuff. In one embodiment, the foodstuff is a soup, and the corresponding reference amount is 245 g. In other embodiments, the reformulated foodstuff contains (or, if in condensed form, the foodstuff diluted per labeled instructions contains) no greater than 900 mg, 890 mg, 850 mg, 800 mg, 750 mg, 700 mg, 650 mg, 600 mg, 550 mg, 500 mg, 450 mg, 400 mg, 350 mg, 300 mg, 250 mg, 200 mg, 150 mg, 140 mg, 120 mg, 100 mg, 80 mg, 75 mg, 50 mg, 40 mg, 35 mg, 30 mg, 25 mg, 20 mg, 10 mg, or 5 mg sodium per reference amount of the foodstuff. Reference amounts are specified in accordance with FDA regulations and 21 CFR 101.12(b) and 101.9(b). For the following illustrative list of foodstuffs, representative reference amounts are provided in parentheses: (1) bakery products, such as cookies (reference amount 30 g) or cakes (reference amount 125 g); (2) dairy products, such as parmesan cheese (reference amount 5 g) or cottage cheese (125 g); (3) soups (reference amount 245 g); (4) sauces, gravies, dips and salsa, such as mustards (5 ml) or spaghetti sauce (reference amount 125 g); (5) meat and meat products, such as dried jerky (reference amount 30 g) or luncheon meats (reference amount 55g), (6) salads (reference amount 100 g), (7) mixed dishes, such as entrees (reference amount 140 g) or pizza (reference amount 140 g), (8) cereal products, such as breakfast cereals (reference amount 15 g) or pastas (reference amount140 g); (9) vegetables, such as pickles (30 g) or frozen vegetables (85 g); (10) legumes, such as dry beans (reference amount 35 g) or tofu (85 g); (11) snacks, such as crackers (reference amount 30 g) or popcorn (reference amount 30 g); and (12) beverage products (240 ml).

In certain embodiments, step (c) includes providing from about 0.003 to about 1 part monophosphate salt per 1.0 part KCl provided in step (b). In other embodiments, from about 0.015 to about 0.33 part monophosphate salt per 1.0 part KCl is provided. In still other embodiments, from about 0.01 to about 0.25 part monophosphate salt per 1.0 part KCl is provided.

In certain embodiments, step (d) includes providing from about 0.01 to about 1 part potassium citrate per 1.0 part KCl provided in step (b). In other embodiments, from about 0.05 to about 0.75 part potassium citrate per 1.0 part KCl is provided. In still other embodiments, from about 0.05 to about 0.5 part potassium citrate per 1.0 part KCl is provided.

In another aspect, the invention provides a method for preparing a foodstuff. The method involves providing from about 0.2 to about 1.5 wt.% potassium chloride, from about 0.002 to about 0.4 wt.% monocalcium phosphate or monopotassium phosphate or both, and from about 0.01 to about 0.6 wt.% potassium citrate.

In another aspect, the invention is directed to a processed foodstuff formulated for reduced sodium content with enhanced salt perception, the foodstuff including: KCl in an amount from about 0.2 to about 1.5 wt.%; a monophosphate salt (MKP and/or MCP) in an amount from about 0.002 to about 0.4 wt.%; a potassium agent in an amount from about 0.01 to about 0.6 wt.%, the potassium agent including one or more of the following: potassium citrate, dipotassium phosphate, tripotassium phosphate, tetrapotassium phosphate, potassium lactate, potassium acetate, potassium tartarate, and potassium formate; and, optionally, NaCl. In preferred embodiments, the potassium agent is potassium citrate. In preferred embodiments, the foodstuff may contain KCl in an amount from about 0.25 to about 1.2 wt.%; a monophosphate salt (MKP and/or MCP) in an amount from about 0.0075 to about 0.05 wt.%; a potassium agent in an amount from about 0.025 to about 0.4 wt.%, the potassium agent including one or more of the following: potassium citrate, dipotassium phosphate, tripotassium phosphate, tetrapotassium phosphate, potassium lactate, potassium acetate, potassium tartarate, and potassium formate; and, optionally, NaCl. In preferred embodiments, the potassium agent is potassium citrate. In certain embodiments, the foodstuff contains from about 0.005 to about 5 wt.% NaCl; or from about 0.01 to about 2 wt.% NaCl; or from about 0.1 to about 1 wt.% NaCl.

In yet another aspect, the invention is directed to a salt taste enhancing blend including: KCl in an amount from about 33 to about 98 wt.%; a monophosphate salt (MKP and/or MCP) in an amount from about 1 to about 33 wt.%; and a potassium agent (potassium citrate, dipotassium phosphate, tripotassium phosphate, tetrapotassium phosphate, potassium lactate, potassium acetate, potassium tartarate, and/or potassium formate) in an amount from about 4 to about 33 wt.%. In preferred embodiments, the potassium agent is potassium citrate. In certain embodiments, the blend contains from about 60 to about 97 wt.% KCl, from about 1.5 to about 20 wt.% monophosphate salt, from about 4 to about 20 wt.% potassium agent. In certain embodiments, the blend contains from about 90 to about 95 wt.% KCl, from about 1 to about 2.5 wt.% monophosphate salt, and from about 4 to about 7.5 wt.% potassium agent. In some embodiments, the blend further contains NaCl.

In certain embodiments, the blend contains no greater than about 80 wt.% NaCl, no greater than about 75 wt.% NaCl, no greater than about 70 wt.% NaCl, no greater than about 65 wt.% NaCl, no greater than about 60 wt.% NaCl, no greater than about 55 wt.% NaCl, no greater than about 50 wt.% NaCl, no greater than about 45 wt.% NaCl, no greater than about 40 wt.% NaCl, no greater than about 35 wt.% NaCl, no greater than about 30 wt.% NaCl, no greater than about 25 wt.% NaCl, no greater than about 20 wt.% NaCl, no greater than about 15 wt.% NaCl, no greater than about 10 wt.% NaCl, or no greater than about 5 wt.% NaCl.

In yet another aspect, the invention is directed to a method for manufacturing a processed foodstuff having a reduced sodium content with similar salt perception compared with a previous formulation of the foodstuff, the method including: (a) providing an adjusted amount of sodium chloride (NaCl) in the reformulated foodstuff, the adjusted amount of NaCl being less than the amount of NaCl in the previous formulation of the foodstuff; (b) providing potassium chloride (KCl) in the reformulated foodstuff; (c) providing an organic acid in the reformulated foodstuff, wherein the organic acid includes lactic acid, malic acid, citric acid, tartaric acid, succinic acid, acetic acid, formic acid, fumaric acid, adipic acid, gluconic acid, and/or pyruvic acid; and (d) optionally, providing in the reformulated foodstuff potassium citrate, potassium lactate, potassium acetate, potassium tartarate, and/or potassium formate. The preferred organic acid is lactic acid, and the preferred potassium agent is potassium citrate. In certain embodiments, the adjusted amount of NaCl is at least 25% less (on a weight basis) than the amount of NaCl used in the previous formulation.

In certain embodiments, step (c) includes providing from about 0.001 to about 0.5 part of the organic acid (e.g., lactic acid) per 1.0 part KCl provided in step (b). In certain embodiments, step (c) includes providing from about 0.001 to about 0.05 part of the organic acid (e.g., lactic acid) per 1.0 part KCl provided in step (b).

In certain embodiments, step (d) includes providing from about 0.01 to about 1.0 part potassium citrate per 1.0 part KCl provided in step (b). In certain embodiments, step (d) includes providing from about 0.05 to about 0.75 part potassium citrate per 1.0 part KCl provided in step (b). In certain embodiments, step (d) includes providing from about 0.05 to about 0.5 part potassium citrate per 1.0 part KCl provided in step (b).

In another aspect, the invention provides a method for preparing a foodstuff. The method involves providing from about 0.2 wt.% to about 1.5 wt.% potassium chloride, from about 0.002 to about 0.4 wt.% organic acid, and from about 0.01 wt.% to about 0.6 wt.% potassium citrate. As the organic acid, one or more of lactic acid, malic acid, citric acid, tartaric acid, succinic acid, acetic acid, formic acid, fumaric acid, adipic acid, gluconic acid, and pyruvic acid may be used.

In still another aspect, the invention is directed to a processed foodstuff formulated for reduced sodium content with enhanced salt perception, the foodstuff including: KCl in an amount from about 0.2 to about 1.5 wt.%; an organic acid (lactic acid, malic acid, citric acid, tartaric acid, succinic acid, acetic acid, formic acid, fumaric acid, adipic acid, gluconic acid, and/or pyruvic acid) in an amount from about 0.001 to about 0.2 wt.%; optionally, a potassium agent in an amount from about 0.01 to about 0.6 wt.%, the potassium agent including one or more of the following: potassium citrate, potassium lactate, potassium acetate, potassium tartarate, and/or potassium formate; and, optionally, NaCl. In certain embodiments, the amount of KCl is from about 0.25 to about 1.2 wt.%, the amount of the organic acid is from about 0.002 to about 0.1 wt.%, and the amount of the potassium agent is from about 0.03 to about 0.4 wt.%. In certain embodiments, the foodstuff contains from about 0.005 to about 5 wt.% NaCl; or from about 0.01 to about 2 wt.% NaCl; or from about 0.1 to about 1 wt.% NaCl.

In yet another aspect, the invention is directed to a salt taste enhancing blend including: (a) KCl in an amount from about 95.2 to about 99.9 wt.% [weight basis is total of components in (a) and (b)]; and (b) an organic acid (lactic acid, malic acid, citric acid, tartaric acid, succinic acid, acetic acid, formic acid, fumaric acid, adipic acid, gluconic acid, and/or pyruvic acid) in an amount from about 0.1 to about 4.8 wt.% [weight basis is total of components in (a) and (b)].

In yet another aspect, the invention is directed to a salt taste enhancing blend including: (a) KCl in an amount from about 55.8 to about 96.6 wt.% [weight basis is total of components in (a), (b), and (c)]; (b) an organic acid (lactic acid, malic acid, citric acid, tartaric acid, succinic acid, acetic acid, formic acid, fumaric acid, adipic acid, gluconic acid, and/or pyruvic acid) in an amount from about 0.1 to about 4.8 wt.% [weight basis is total of components in (a), (b), and (c)]; (c) a potassium agent (potassium citrate, potassium lactate, potassium acetate, potassium tartarate, and/or potassium formate) in an amount from about 3.3 to about 39.4 wt.% [weight basis is total of components in (a), (b), and (c)]. In certain embodiments, the blend contains potassium chloride in an amount from about 90.0 to about 95 wt.%, organic acid in an amount from about 0.1 to about 2.5 wt.%, and potassium agent in an amount from about 4.9 to about 7.5 wt.%. In certain preferred embodiments, the potassium agent is potassium citrate.

In yet another aspect, the invention is directed to a processed foodstuff formulated for reduced sodium content with enhanced salt perception, the foodstuff including: sodium ions at a concentration from about 0.8 to about 1000 mmol/l; potassium ions at a concentration from about 20 to about 340 mmol/l; chloride ions at a concentration from about 20 to about 1150 mmol/l; phosphate ions at a concentration from about 0.1 to about 40 mmol/l; and citrate ions at a concentration from about 0.1 to about 40 mmol/l. In certain embodiments, the foodstuff contains sodium ions at a concentration from about 1.5 to about 800 mmol/l; potassium ions at a concentration from about 30 to about 270 mmol/l; chloride ions at a concentration from about 30 to about 1000 mmol/l; phosphate ions at a concentration from about 0.3 to about 10 mmol/l; and citrate ions at a concentration from about 1 to about 25 mmol/l. In certain embodiments, the foodstuff contains sodium ions at a concentration from about 20 to about 410 mmol/l; potassium ions at a concentration from about 30 to about 270 mmol/l; chloride ions at a concentration from about 40 to about 600 mmol/l; phosphate ions at a concentration from about 0.3 to about 10 mmol/l; and citrate ions at a concentration from about 1 to about 25 mmol/l. In certain embodiments, the foodstuff contains sodium ions at a concentration from about 130 to about 200 mmol/l; potassium ions at a concentration from about 80 to about 170 mmol/l; chloride ions at a concentration from about 200 to about 300 mmol/l; phosphate ions at a concentration from about 1.0 to about 3.0 mmol/l; and citrate ions at a concentration from about 3 to about 20 mmol/l.

In another aspect, the invention is directed to a foodstuff characterized by a ratio of sodium ions to potassium ions from about 0.07:1 to about 14:1; a ratio of sodium ions to chloride ions from about 0.03:1 to about 10:1; a ratio of sodium ions to phosphate ions from about 2:1 to about 1365:1; and a ratio of sodium ions to citrate ions from about 0.8:1 to about 410:1. In certain embodiments, the foodstuff is characterized by a ratio of sodium ions to potassium ions is from about 0.65:1 to about 2.5:1; a ratio of sodium ions to chloride ions is from about 0.3:1 to about 1:1; a ratio of sodium ions to phosphate ions is from about 43.1:1 to about 200:1; and a ratio of sodium ions to citrate ions is from about 6.5:1 1 to about 67:1.

In yet another aspect, the invention is directed to a processed foodstuff formulated for reduced sodium content with enhanced salt perception, the foodstuff including: sodium ions at a concentration from about 0.8 to about 1000 mmol/l; potassium ions at a concentration from about 20 to about 340 mmol/l; chloride ions at a concentration from about 20 to about 1150 mmol/l; lactate ions at a concentration from about 0.1 to about 30 mmol/l; and citrate ions at a concentration from about 0.1 to about 40 mmol/l. In certain embodiments, the foodstuff contains sodium ions at a concentration from about 1.5 to about 800 mmol/l; potassium ions at a concentration from about 30 to about 270 mmol/l; chloride ions at a concentration from about 30 to about 1000 mmol/l; lactate ions at a concentration from about 0.1 to about 15 mmol/l; and citrate ions at a concentration from about 1 to about 25 mmol/l. In certain embodiments, the foodstuff contains sodium ions at a concentration from about 20 to about 410 mmol/l; potassium ions at a concentration from about 30 to about 270 mmol/l; chloride ions at a concentration from about 40 to about 600 mmol/l; lactate ions at a concentration from about 0.1 to about 15 mmol/l; and citrate ions at a concentration from about 1 to about 25 mmol/l. In certain embodiments, the foodstuff contains sodium ions at a concentration from about 130 to about 200 mmol/l; potassium ions at a concentration from about 80 to about 200 mmol/l; said chloride ions are at a concentration from about 200 to about 400 mmol/l; said lactate ions are at a concentration from about 1.0 to about 2 mmol/l; and citrate ions are at a concentration from about 5 to about 10 mmol/l.

In another aspect, the invention is directed to a foodstuff characterized by a ratio of sodium ions to potassium ions from about 0.07:1 to about 14: 1; a ratio of sodium ions to chloride ions from about 0.03:1 to about 10:1; a ratio of sodium ions to lactate ions from about 1.3:1 to about 4100:1; and a ratio of sodium ions to citrate ions from about 0.8:1 to about 410:1. In certain embodiments, the foodstuff is characterized by a ratio of sodium ions to potassium ions from about 0.65:1 to about 2.5:1; a ratio of sodium ions to chloride ions from about 0.3:1 to about 1:1; a ratio of sodium ions to lactate ions from about 65:1 to about 200:1; and a ratio of sodium ions to citrate ions from about 6.5:1 to about 67:1.

The description of elements of the embodiments of one particular aspect of the invention can be applied to other aspects of the invention as well.

### BRIEF DESCRIPTION OF THE DRAWINGS

FIG. 1 is a graph illustrating pH measurements for certain embodiments of the present invention containing monophosphate salt, in comparison with sodium chloride solutions.

FIG. 2 is a graph illustrating pH measurements for certain embodiments of the present invention having lactic acid, in comparison with sodium chloride solutions.

FIG. 3 is a graph illustrating conductance measurements for certain embodiments of the present invention having monophosphate salt, in comparison with sodium chloride solutions.

FIG. 4 is a graph illustrating conductance measurements for certain embodiments of the present invention having lactic acid, in comparison with sodium chloride solutions.

FIG. 5 is a graph illustrating the salt impact of reduced sodium formulations according to certain embodiments of the present invention.

### DETAILED DESCRIPTION

It is contemplated that compositions, mixtures, systems, methods, and processes of the claimed invention encompass variations and adaptations developed using information from the embodiments described herein. Adaptation and/or modification of the compositions, mixtures, systems, methods, and processes described herein may be performed by those of ordinary skill in the relevant art.

Throughout the description, where systems are described as having, including, or comprising specific components, or where processes and methods are described as having, including, or comprising specific steps, it is contemplated that, additionally, there are systems of the present invention that consist essentially of, or consist of, the recited components, and that there are processes and methods according to the present invention that consist essentially of, or consist of, the recited processing steps.

Similarly, where mixtures and compositions are described as having, including, or comprising specific compounds and/or materials, it is contemplated that, additionally, there are mixtures and compositions of the present invention that consist essentially of, or consist of, the recited compounds and/or materials.

It should be understood that the order of steps or order for performing certain actions is immaterial so long as the invention remains operable. Moreover, two or more steps or actions may be conducted simultaneously.

The mention herein of any publication, for example, in the Background section, is not an admission that the publication serves as prior art with respect to any of the claims presented herein. The Background section is presented for purposes of clarity and is not meant as a description of prior art with respect to any claim.

The headers below are provided for ease of reading and are not meant to limit the description of elements of the invention.

As previously disclosed, certain embodiments of the present invention are directed to a salt taste enhancing blend having (i) potassium chloride and (ii) monopotassium phosphate (MKP) and/or monocalcium phosphate (MCP), or, in alternative embodiments, lactic acid. Certain embodiments may further contain NaCl.

Experiments were conducted to compare pH and conductance behavior of aqueous solutions of the salt enhancer blends described above over a wide concentration range to the pH and conductance behavior of aqueous solutions of NaCl.

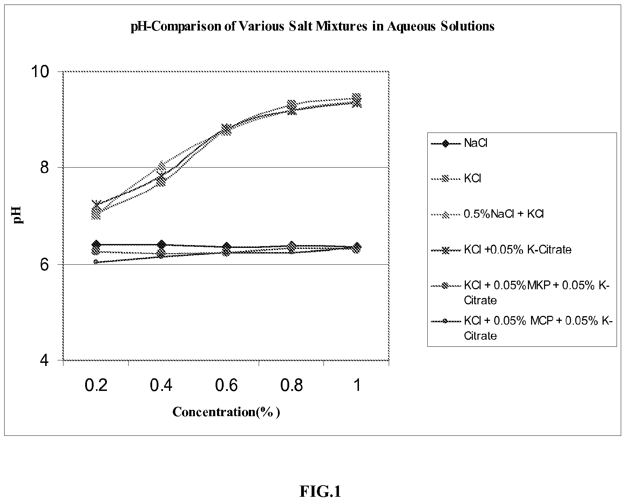

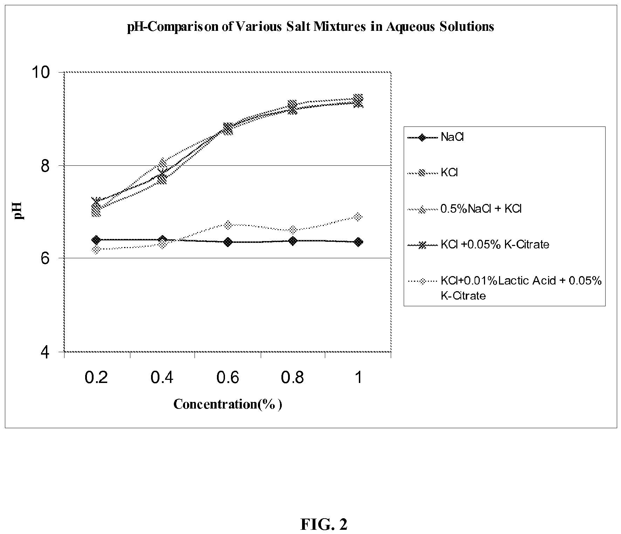

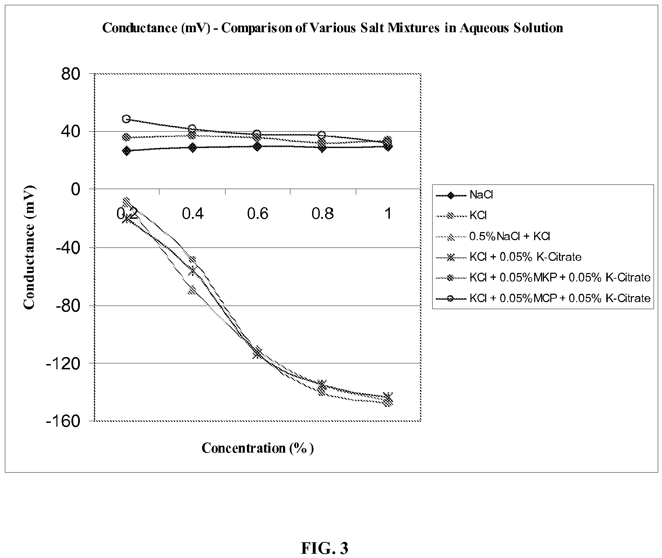

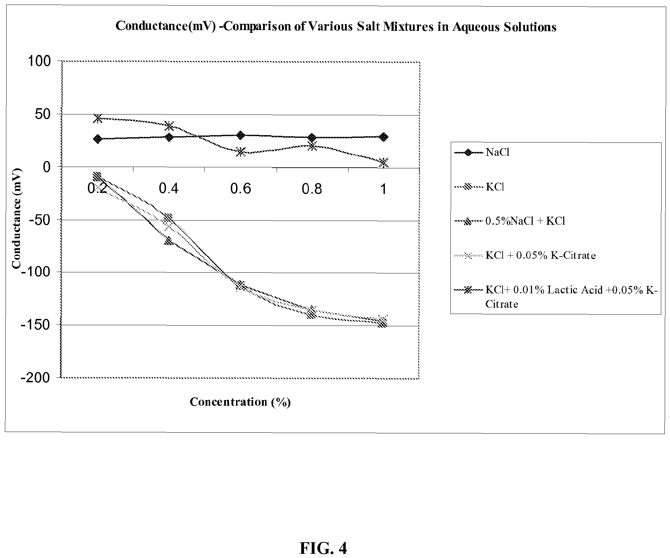

As shown in Figures 1-4, conventional potassium chloride solutions have higher pH and lower conductance than sodium chloride solutions, particularly as concentration increases. Without being limited by theory, this observation may explain, at least in part, why conventional salt substitutes based on potassium chloride tend to have a soapy or bitter aftertaste, particularly at higher concentrations. Further, as shown in Figures 1-4, the rote use of potassium chloride, singly or in combination with sodium chloride or potassium citrate simply does not provide sodium chloride equivalent pH or conductance behavior. The salt enhancer blends disclosed herein, however, closely mimic the pH and conductance of sodium chloride aqueous solutions. The pH and conductance experiments also demonstrate the surprising effectiveness of the *combination* of potassium chloride (KCl), monophosphate salt or lactic acid, and potassium citrate, in accordance with various embodiments of the invention, for matching pH and conductance of NaCl solutions over a wide range of concentrations

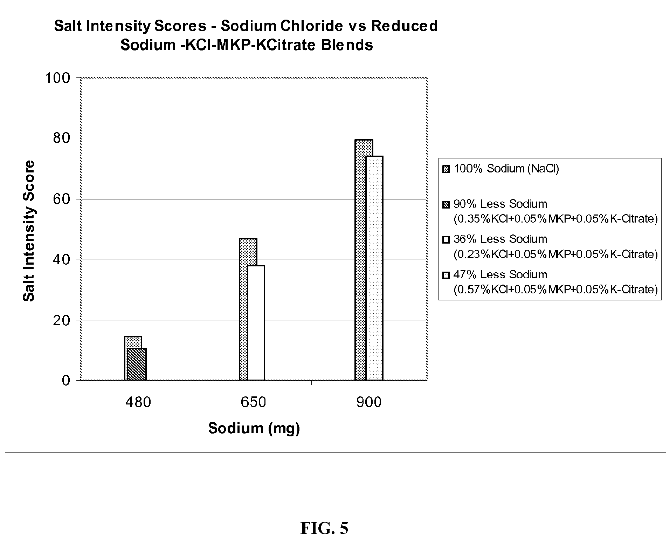

Experiments disclosed herein show the surprising synergistic effect between sodium chloride and the embodiments of the present invention. This synergistic effect is evidenced over wide range of overall concentrations in aqueous solutions, and suggests that compositions of the present invention are useful in a wide variety of food categories. In various embodiments, mixtures of the present invention enhance the perceived salty impact imparted by lower sodium chloride content in processed foodstuff. Indeed, and as shown in Figure 5, reduced sodium aqueous solutions are perceived to have a much greater amount of sodium chloride.

In the following, tasting experiments conducted by both professional tasters and lay test persons are described. The assessments demonstrate surprisingly high salt impact and overall flavor perception in foodstuffs reformulated for substantially reduced sodium content according to methods of the invention. The high salt impact is achieved without the generally negative taste attributes normally associated with processed foodstuffs containing potassium chloride-based salt substitutes. Unless otherwise indicated, the processed foodstuffs described herein were manufactured and tested by Campbell Soup Company of Camden, New Jersey. Still further, experimental foodstuff samples were generally tasted and evaluated by blind inspection by a group of 10-15 people.

### 1. Compositions containing monopotassium phosphate or monocalcium phosphate

In certain embodiments, the invention relates to a salt taste enhancing composition comprising a blend of three potassium salts - potassium chloride, mono potassium phosphate, and potassium citrate - which, when used in conjunction with sodium chloride, enhances (e.g., at least doubles) the salt perception in foods and beverages, while imparting no or limited aftertaste. In certain embodiments, the salt taste enhancing blend contains from about 20 to about 98 wt.% potassium chloride (KCl) (preferably 60 - 97 wt.%), from about 1 to about 40 wt.% (preferably 1.5 - 20 wt.%) monophosphate salt, from about 4 to about 40 wt.% (preferably 4 - 20 wt.%) potassium citrate, and, optionally, sodium chloride (NaCl).

Embodiments of the present invention may be modified in several ways without deviating from the scope of the invention. In some embodiments, monopotassium phosphate may be replaced, partially or wholly, by monocalcium phosphate. Potassium citrate may be replaced, in various embodiments, by dipotassium phosphate, tripotassium phosphate, tetrapotassium phosphate, potassium lactate, potassium acetate, potassium tartarate, or potassium formate. Further, flavoring agents, fillers, and modifiers such as, but not limited to, high-fructose corn syrup, starches, gums, and/or capsaicin, may be used with certain preferred embodiments of the present invention.

### Experimental Example 1

In this example, salt enhancer blends were prepared according to Formulas 1-5 listed in Table 1:

**Table 1: Salt Enhancer Blends Prepared in Experimental Example**

| **INGREDIENT** | **FORMULA 1** | **FORMULA 2** | **FORMULA 3** | **FORMULA 4** | **FORMULA 5** |
|---|---|---|---|---|---|
| | **(wt.% of blend)** | **(wt.% of blend)** | **(wt.% of blend)** | **(wt.% of blend)** | **(wt.% of blend)** |
| Potassium Chloride (KCl) | 66.66 | 57.64 | 33.34 | 80.00 | 75.00 |
| Monopotassium Phosphate (MKP) | 16.67 | 28.57 | 33.33 | 10.00 | 12.50 |
| Potassium Citrate (K-Citrate) | 16.67 | 14.29 | 33.33 | 10.00 | 12.50 |
| **Total (%)** | **100.00** | **100.00** | **100.00** | **100.00** | **100.00** |
| **Wt.% in Solution** | **0.6** | **0.7** | **1.2** | **0.5** | **0.8** |

The salt enhancer blends were evaluated at the indicated usage rates in aqueous solutions containing 0.5 wt.% sodium chloride (480 mg sodium). The salt perception was compared against a control 480 mg sodium solution, without the enhancer added. Salt perception of each formula was rated as either less salty than control, equally salty as control, or more salty than control. Aftertaste of each formula was rated as either clean, metallic, or bitter. The salt solutions having an enhancer blend were rated to have a higher salt perception (e.g., taste more salty) compared with the control, with little or no aftertaste (clean). Again, this is particularly surprising since all salt solutions had the same amount of sodium,

### Experimental Example 2

In this example, several embodiments of the present invention (see Table 2) were evaluated in a chicken broth. Chicken broth having 480 mg of sodium with no added enhancer blend was used as a control. Ten chicken broth test samples were prepared containing salt enhancer blends as recited by Table 2, formulas 1-10. An 11-member trained sensory panel evaluated products, for, among other attributes, overall flavor, sweetness, salt intensity, and overall negative on a 15-point scale. These professional tasters calibrated their respective palates using reference broths (neither control nor experimental) containing 480 mg, 650 mg, and 890 mg of sodium. In this way, a numerical score could be assigned to the degree of salt perception. Panelists rated the 480 mg sodium reference broth to have a salt intensity score of 3.5, the 650 mg sodium reference broth to have a salt intensity score of 7.5, and the 890 mg sodium reference broth to have a salt intensity score of 13.5. Test samples containing blends prepared according to embodiments of the invention were tasted blind, and randomly evaluated in triplicate by panelists. Samples were rated for Initial Taste including Initial Overall Flavor, Initial Sweetness, Initial Saltiness, and Initial Overall Negative Taste. The same attributes were rated in Aftertaste, Aftertaste Overall Flavor, Aftertaste Sweet, Aftertaste Saltiness, and Aftertaste Overall Negative Taste. Results are summarized in Table 3. Values with the same letter in a column are not significantly different from each other.

All test samples containing varying salt enhancer blend compositions were rated to be significantly higher in initial salt perception (higher salt impact) and higher overall flavor perception (higher flavor impact) compared to a control having no added salt enhancer blend. There were no significant differences between the any and all samples for sweetness intensity, either in initial or in aftertaste evaluation. Thus, the test samples prepared according to various embodiments of the present invention were found to provide higher salt impact without affecting the sweetness profile of the chicken broth. All test samples were rated to have higher both initial and aftertaste overall negative perception compared to the control sample.

As compared to control in Table 3, addition of potassium chloride alone to chicken broth increased salt perception (from 4.24 to 7.69) and overall flavor impact (from 5.59 to 8.51), but nearly also doubled the overall negative taste profile (3.89 to 6.25) of the chicken broth. Still further, and as noted below, test samples 1-9 as embodiments of the present invention were all rated to have higher salt impact than both mere addition of potassium chloride and the control sample. Surprisingly, test samples 1-9 also exhibited higher overall flavor.

**Table 2: Salt Enhancer Blend Compositions used in Experimental Example 2**

| **Ingredient** | Sample 1 | Sample 2 | Sample 3 | Sample 4 | sample 5 | Sample 6 | Sample 7 | sample 8 | Sample 9 | Sample 10 | Sample 11 |
|---|---|---|---|---|---|---|---|---|---|---|---|
| | (wt.%) | (wt.%) | (wt.%) | (wt.%) | (wt.%) | (wt.%) | (wt.%) | (wt.%) | (wt.%) | (wt.%) | (wt.%) |
| Potassium Chloride | 40.0 | 40 | 66 7 | 66.7 | 40.0 | 66.6 | 50.0 | 50.0 | 50 | 100 | 0 |
| Monopotassium Phosphate | 20.0 | 40 | 33.3 | 0.0 | 30.0 | 16.7 | 37.5 | 12.5 | 25 | 0.0 | 0 |
| Potassium Citrate ( | 40.0 | 20 | 0.0 | 33.3 | 30.0 | 16.7 | 12.5 | 37.5 | 25% | 0.0 | 0 |
| Total (%) | 100.0 | 100.0 | 100.0 | 100.0 | 100.0 | 100.0 | 100.0 | 100.0 | 100.0 | 100.0 | 0 |
| Weight % in solution | 1 | 1 | 0.6 | 0.6 | 1 | 0.6 | 0.8 | 0.8 | 0.8% | 1 | 0 |

| | | | | | | | | | | | |
|---|---|---|---|---|---|---|---|---|---|---|---|
| Note: Salt enhancer blends were tested in Chicken broth at the suggested usage rate. %breakdown of individual components are listed in Table 3. Sample Nos. in Table 2 and Table 3 correspond to each other. | | | | | | | | | | | |

**Table 3. Wt% Components of Salt Enhancer Blend Compositions and Summary of Their Effects on Taste Attributes in Chicken Broth.**

| Sample | KCl | MKP | K - Citrate | I-Overall Flavor | I-Sweet | I-Salt | I-Overall Negative | A-Overall Flavor | A-Sweet | A--Salt | A-Overall Negative |
|---|---|---|---|---|---|---|---|---|---|---|---|
| 1 | 0.40% | 0.20% | 0.40% | 11.48 A | 0.34 A | 10.25A | 9.66A | 8 60 A | 0.39A | 6 94A | 7 78 A |
| 2 | 0.40% | 0.40% | 0.20% | 11.34 A | 0.55 A | 8 38 ABC | 9.42A | 8 11 A | 0.32A | 5 31A | 7.14A |
| 3 | 0.40% | 0.20% | 0% | 11.29 A | 0.72 A | 8.89 ABC | 9.08AB | 7.71 AB | 0.28A | 5.82A | 7.14 AB |
| 4 | 0.40% | 0% | 0.20% | 10.143 A | 0.32 A | 8.30 ABC | 7.93ABC | 7.25 AB | 0.24A | 5.18A | 5.97 AB |
| 5 | 0.40% | 0.30% | 0.30% | 10.54 A | 0.24 A | 7.92 BC | 8.46ABC | 8.03 AB | 0.23 A | 5.18A | 6.79 AB |
| 6 | 0.40% | 0.10% | 0.10% | 10.82 A | 0.39 A | 9.07 ABC | 7.71 ABC | 7.39 AB | 0.23 A | 5.22 A | 6.17 AB |
| 7 | 0.40% | 0.30% | 0.10% | 11.16 A | 0.45 A | 9.79 AB | 8.81 BC | 7.59 AB | 0.22 A | 6.17A | 6.79 AB |
| 8 | 0.40% | 0.10% | 0.30% | 10.34 A | 0.27 A | 8.91 ABC | 6.84 BC | 7.95 AB | 0.20A | 5.87A | 6.11 AB |
| 9 | 0.40% | 0.20% | 0.30% | 10.25 A | 0.30 A | 8.90 ABC | 7.98 ABC | 7.09 AB | 0.20A | 5.62 A | 6.23 AB |
| 10 | 0.40% | 0 | 0 | 8.51 B | 0.26A | 7.69 C | 6.25 C | 6.17 B | 0.18A | 4.86 A | 5.24 B |
| 11 | 0 | 0 | 0 | 5.59 C | 0.64 A | 4.24 D | 3.89 D | 3.89 C | 0.16A | 2.58 B | 2.02 C |

### Experimental Example 3

Various embodiments of the present invention were also shown to improve salt perception of various kinds of salts, including sea salts. In this experiment, the salt enhancing effect of the salt enhancer blends on various sea salt samples is illustrated. Three sets of 500 g aqueous solutions of three different sea salt samples (Picromerite, Carnallite and Kainite) at 0.5 wt.% concentration were prepared (9 solutions, total). To one set of solutions, the salt enhancer blend of Formula 1, Experiment 1 was added at 0.6 wt.%. To the second set of solutions, 0.1 wt.% Monopotassium Phosphate + 0.1 wt.% Potassium Citrate was added (no KCl). Lastly, the third set of solutions containing sea salts alone (without additions) was used as control. Samples were evaluated for salt perception against the control set of solutions. Those sea salt solutions having the enhancer blend (formula 1) were found to have higher salt impact as compared to control and also as compared to those sea salt solutions only having the addition of monopotassium phosphate and potassium citrate.

### Experimental Example 4

In this example, low or reduced sodium salt dry blends were prepared according to Formulas 1-4 listed in Table 4:

**Table 4: Low- or Reduced-Sodium Salt Dry Blends Prepared for Use in Experimental Example 4**

| **INGREDIENT** | **FORMULA 1** | **FORMULA 2** | **FORMULA 3** | **FORMULA 4** |
|---|---|---|---|---|
| | **(140 mg Sodium)** | **(280 mg Sodium) 70% Reduced Sodium*** | **(480 mg Sodium) 50% Reduced Sodium*** | **(720mg Sodium) 25% Reduced Sodium*** |
| | **wt.% of blend** | **wt.% of blend** | **wt.% of blend** | **wt.% of blend** |
| Sodium Chloride | 15.00 | 30.00 | 50.00 | 75.00 |
| Potassium Chloride | 75.00 | 50.00 | 40.00 | 23.00 |
| Monopotassium Phosphate | 5.00 | 10.00 | 5.00 | 1.0 |
| Potassium Citrate | 5.00 | 10.00 | 5.00 | 1.0 |
| **Total** | **100. 00** | **100. 00** | **100. 00** | **100. 00** |
| **Usage Rate (g)** | **2.4g** | **2.4 g** | **2.4 g** | **2.4** |

| | | | | |
|---|---|---|---|---|
| * As compared to full sodium (960mg) control | | | | |

The ingredients were dry mixed together. Salt solutions of 8 ounces each were prepared at the indicated usage rates (g) and tasted for salt perception and compared against reference samples containing 140 mg, 280 mg, 480 mg, and 720 mg sodium from NaCl (without use of embodiments of the present invention). Each sodium level was evaluated between "straight" baseline salt reduction and the analogous salt reduction using embodiments of the present invention. For example, 140mg reduced sodium was compared to 140 mg reduced sodium containing a composition according to an embodiment of the invention. All test solutions including compositions according to embodiments of the present invention were found to have higher salt perception as compared to its respective baseline sample. Still further, these salt enhancer blends at 2400 mg (- ½ teaspoon) delivered very nearly the salt impact of the non-reduced control. That is to say, a sample reduced by 70% but containing compositions according to embodiments of the present invention, delivered a salt impact equivalent to the control (i.e., 100% salt).

### Experimental Example 5

Various embodiments of the present invention were also shown to be easily processed into dry blends. In this example, a 50% reduced sodium salt blend was prepared according to Formula 3 in Example 4, and processed as follows. A 30% concentrated solution of Formula 3 was prepared by dissolving in bottled water. The uniformly dissolved solution was poured into a shallow tray and dried in an oven at 350-400 °F for about 45-60 minutes, until all the moisture was evaporated, and a uniform dry salt blend was obtained. The dried salt blend was then ground to a uniform particle size, and packaged for further use.

### Experimental Example 6

In this example, embodiments of the present invention having potassium chloride, monocalcium phosphate or monopotassium phosphate, and potassium citrate or dipotassium phosphate were prepared according to the compositions listed in Table 5. Salt perception of formulas 2 and 3 were compared against formula 1.

**Table 5: Salt Enhancer Blend Compositions_{.}**

| **INGREDIENT** | **FORMULA 1** | **FORMULA 2** | **FORMULA 3** |
|---|---|---|---|
| | **(wt.% of blend)** | **(wt.% of blend)** | **(wt.% of blend)** |
| Potassium Chloride | 66.66 | 66.66 | 66.66 |
| Monopotassium Phosphate (MKP) | 16.67 | 0.00 | 16.67 |
| Dipotassium Phosphate (DKP) | 0.00 | 0.00 | 16.67 |
| Monocalcium Phosphate (MCP) | 0.00 | 16.67 | 0.00 |
| Potassium Citrate (K-Citrate) | 16.67 | 16.67 | 0.00 |
| | | | |
| **Total (%)** | **100.00** | **100.00** | **100.00** |
| **Wt.% in Solution** | **0.6** | **0.6** | **0.6** |

Salt enhancer blends were evaluated at their indicated usage rate, in aqueous solutions containing 0.5 wt.% sodium chloride (480 mg sodium). The salt perception was compared against a control 480 mg sodium solution, without the enhancer added. All salt enhancer blends were found to have a higher salt impact than control, which is to say that each blend was evaluated as more salty than control. Still further, salt enhancer blends having KCl + MCP + K-Citrate or KCl + MKP + DKP were found to have salt impact equivalent to that of (KCl + MKP + K-Citrate).

### Experimental Example 7

In this example, the application of a salt enhancer blend in vegetable juice is illustrated. A test sample of vegetable juice with a salt enhancer blend (Formula 2 of Example 1) and a control sample were prepared and evaluated. Both products contained 140 mg of sodium. Products were tasted and evaluated by blind inspection of a group consisting of 10-15 people. Vegetable juice having the enhancer blend was found to have higher salt impact and cleaner taste as compared to control. Still further, the vegetable juice having the enhancer blend and very low sodium content was found to have better overall taste and was preferred over the current control.

### Experimental Example 8

The application of salt enhancer blend in vegetable juice with sodium levels reduced from 710 to 480 mg (33% reduction) is illustrated in this example. Four 5000 g batches of vegetable juice samples were prepared. Batch 1 contained full sodium (710 mg) while Batch 2 contained vegetable juice reduced to 480 mg (33% reduction) as a straight reduction. Batch 3 contained vegetable juice reduced to 480 mg using a potassium chloride - magnesium salt blend while Batch 4 contained vegetable juice reduced to 480 mg sodium using a salt enhancer blend according to an embodiment of the present invention (salt enhancer blend having Formula 1 of Experiment 1). Samples were tasted and evaluated by blind inspections by a group of 10-15 people. Vegetable juice prepared with a blend according to an embodiment of the present invention was found to have an equivalent salt impact as compared to the full sodium product despite having 33% less sodium. Still further, vegetable juice having an enhancer blend was found to have a higher salt impact as compared to Batch 2 and Batch 3 reduced sodium products. And while tasting saltier, Batch 4 samples were also found to have better overall taste and was preferred over the other reduced sodium batches.

### Experimental Example 9

Various embodiments of the present invention were found to be useful in a variety of food products, and facilitated reduced sodium foodstuff formulation while providing no significant loss of overall taste. In this experiment, the use of a salt enhancer blend to reduce sodium content in white pan bread is illustrated. The bread consists of flour, water, yeast, nonfat dry milk, shortening, vitamin C, and table salt on a 100g flour basis. Control samples were provided having full sodium (2250 mg of NaCl). Reduced sodium samples were provided having 920 mg of NaCl (60% reduction) and an embodiment of the present invention (salt enhancer blend having Formula 2 of Experiment 1). The reduced sodium sample provides a mere 70-80 mg of sodium per one-slice serving versus 200 mg of sodium provided by the control sample. Breads were baked according to the standard baking procedure. Products were tasted and evaluated by blind inspection of a group consisting of 10-15 people. Bread samples having an enhancer blend were surprisingly found to have a salt impact equivalent to that of the full sodium sample despite having 60% less salt. The reduced sodium samples were also found to have equivalent overall taste, without any indication of negative aftertaste, as the full sodium samples.

### Experimental Example 10

In this example, the application of a salt enhancer blend in a tomato-based pasta sauce is demonstrated. Three 5000 g batches of tomato-based pasta sauce were prepared. Batch 1 being full sodium (580 mg sodium) was used as a control. Batch 2 was a 240 mg reduced sodium formulation (straight reduction), while Batch 3 was a 240 mg reduced sodium formulation containing a blend according to an embodiment of the present invention(salt enhancer blend having Formula 1 of Experiment 1). The 240 mg sodium level corresponds to 10 % RDI (recommended daily intake) and a 60 % reduction in the sodium content of the control. Samples were tasted and evaluated by blind inspection by a group of 10-15 people. The reduced sodium pasta sauce with salt enhancer blend was found to have a greater salt impact and improved taste as compared to the straight reduction. Still further, the reduced sodium pasta sauce with salt enhancer blend was, surprisingly, found to have salt impact similar to the full sodium control and was found to be equally acceptable to control. Some embodiments of the present invention thus facilitate a 60 % reduction in sodium with equivalent taste, little or no additional bitterness, and salt perception equivalent to the full sodium control.

### Experimental Example 11

Some embodiments of the present invention were found to be useful in a variety of soup products, and facilitated reduced sodium formulations while providing no significant loss of overall taste. In this experiment, the application of salt enhancer blend in a chicken broth based soup having 890 mg of sodium per serving (Group 1), a cream based soup having 870 mg of sodium per serving(Group 2), and tomato based soup having 710 mg of sodium per serving (Group 3) was demonstrated. Three samples per group were prepared; each group had a full sodium sample and a reduced sodium sample having 480 mg sodium(at least about a 33% reduction), straight reduction and 480 mg reduced sodium containing a blend according to an embodiment of the present invention (salt enhancer blend having Formula 1 of Experiment 1). All soups at 480 mg sodium, but lacking the enhancer blend, were found to have significantly lower salt impact, and further unacceptable taste, as compared to the full sodium sample. Soups with the salt enhancer blend were found to have salt impact equivalent to the full sodium sample, and were significantly preferred over the straight reduction reduced sodium sample. Still further, soups containing a composition according to an embodiment of the present invention were found to have acceptable taste as compared to the full sodium product without evidence of negative aftertaste.

### Experimental Example 12

In this experiment, the application of a salt enhancing blend containing potassium chloride, monopotassium phosphate, and potassium citrate was further evaluated in a tomato-based soup. A control sample with 710 mg sodium (full sodium) and a reduced sodium sample having 480 mg sodium (about 33% reduction) were prepared. The reduced sodium sample contained a salt enhancer blend having 0.6 wt.% potassium chloride, 0.02 wt.% monopotassium phosphate, and 0.1 wt.% potassium citrate. Products were blind tasted and evaluated by lay persons in a consumer home use test. Products were scored on a 1-5 scale for, among other attributes, overall appeal, and taste by - 600 lay consumers. Still further, saltiness (i.e., salt impact) was qualitatively judged from not salty enough to much too salty. As used by consumers, all soups were generally prepared for consumption by dilution per label instructions corresponding to 1:1 ratio with water. As prepared, the reduced sodium soups would express about 0.3 wt.% potassium chloride, 0.01 wt.% monopotassium phosphate, and 0.05 wt.% potassium citrate. Reduced sodium (480 mg) and full sodium (710 mg) soup samples were found to have equivalent overall liking scores (4.9 as compared to 5.0), and taste scores (4.0 as compared to 4.1). Thus as now shown, reduced sodium soup products containing a blend according to an embodiment of the present invention were shown to be equivalent to the full sodium products in blind consumer testing. 81 % of blind consumers judged the full sodium soup to have the appropriate and expected amount of saltiness. Interestingly, and surprisingly, 78% of blind consumer test base also judged the reduced sodium soup to have the appropriate and expected amount of saltiness. Thus, these lay consumers found saltiness to be equivalent between the full sodium soup product and its reduced sodium analog despite a reduction of about 33% sodium.

### 2. Compositions containing an organic acid

In certain embodiments, the invention relates to a salt taste enhancing composition comprising a blend of potassium chloride and an organic acid, which, when used in conjunction with sodium chloride, enhances (e.g., at least doubles) the salt perception in aqueous solutions as well as in foods and beverages, while imparting no or limited aftertaste. In preferred embodiments, the organic acid is lactic acid. In certain embodiments, the salt taste enhancing blend contains from about 95.2 to about 99.9 wt.% potassium chloride (KCl), and from about 0.1 to about 4.8 wt.% lactic acid. In certain embodiments, the composition preferably further contains potassium citrate. Certain embodiments of the present invention are composed of from about 55.8 to about 96.6 wt.% potassium chloride, from about 0.1 to about 4.8 wt.% lactic acid, and from about 3.3 to about 39.4 wt.% potassium citrate. Still further embodiments contain about 90 to about 95 wt.% potassium chloride, from about 0.1 to about 2.5 wt.% lactic acid, and about 4.9 to about 7.5 wt.% potassium citrate. Further, flavoring agents, fillers, and modifiers including, but not limited to, high-fructose corn syrup, starches, gums, and/or capsaicin, may optionally be used with certain preferred embodiments of the present invention.

As an alternative to potassium citrate, one or more of the following components may be used: dipotassium phosphate, tripotassium phosphate, tetrapotassium phosphate, potassium lactate, potassium acetate, potassium tartarate, and potassium formate.

The following examples illustrate the use and effect of these compositions in certain food products.

### Experimental Example 13

In this experiment, the application of salt enhancing compositions containing potassium chloride and lactic acid was evaluated in chicken broth-based garnished soups. Soups C1, C2 , and C3 contained full sodium of 580, 620, and 640 mg, respectively. A C1 control sample with 580 mg sodium (full sodium) and a C1 reduced sodium sample having 480 mg sodium (about 18% reduction) were prepared. The C1 reduced sodium sample contained about 0.72 wt.% potassium chloride and 0.004 wt.% lactic acid. As prepared for consumption (*i.e.*, diluted 1:1 per label instructions), the C1 reduced sodium soups would express about 0.36 wt.% potassium chloride and 0.002 wt.% lactic acid.

A C2 control sample with 620 mg sodium (full sodium) and a C2 reduced sodium sample having 480 mg sodium (about 23% reduction) were prepared. The C2 reduced sodium sample contained about 0.8 wt.% potassium chloride and 0.004 wt.% lactic acid. As prepared for consumption, the C1 reduced sodium soups would express about 0.4 wt.% potassium chloride and 0.002 wt.% lactic acid.

A C3 control sample with 640 mg sodium (full sodium) and a C3 reduced sodium sample having 480 mg sodium (about 25% reduction) were prepared. The C3 reduced sodium sample contained about 0.72 wt.% potassium chloride and 0.004 wt.% lactic acid. As prepared for consumption, the C1 reduced sodium soups would express about 0.36 wt.% potassium chloride and 0.002 wt.% lactic acid.

All reduced sodium (480 mg) soups were evaluated against its full sodium (580-640 mg) analog by a group of ∼ 60 lay people. Products were scored on the basis of overall liking, appearance, and flavor on a 9-point hedonic scale, 1 being extremely disliked to 9 being extremely liked. All reduced sodium varieties scored equally in hedonic ratings for overall liking, appearance, and overall flavor and were equally acceptable to full sodium varieties.

**Table 6. Hedonic Ratings for full and reduced sodium soups described in Experimental Example 13.**

| **Hedonic** | **C3** | | **C2** | | **C1** | |
|---|---|---|---|---|---|---|
| **Measure** | **Full Sodium** | **480mg Sodium** | **Full Sodium** | **480 mg Sodium** | **Full Sodium** | **480 mg Sodium** |
| Overall Liking | 6.7 | 6.6 | 6.3 | 6.2 | 5.9 | 5.9 |
| Appearance Liking | 6.6 | 6.6 | 6.9 | 6.9 | 6.2 | 5.6 |
| Overall Flavor Liking | 6.5 | 6.6 | 6.1 | 6.0 | 5.7 | 5.7 |

| | | | | | | |
|---|---|---|---|---|---|---|
| Hedonic Scale: 1 -Dislike extremely, 9 - Like Extremely. | | | | | | |

### Experimental Example 14

In this experiment, the application of salt enhancing compositions containing potassium chloride, lactic acid, and potassium citrate combinations in a chicken broth-based garnished soup demonstrated. Three samples delivering 480 mg sodium per serving were prepared with potassium chloride/lactic acid/potassium citrate salt enhancing compositions: Control samples S1, S2, and S3 each with 890 mg sodium (full sodium) were prepared. Still further, reduced sodium analogs S1r, S2r, and S3r having 480 mg sodium (about 46% reduction) were also prepared. Reduced sodium sample S1r contained about 0.8 wt.% potassium chloride, about 0.012 wt.% lactic acid, and about 0.1 wt.% potassium citrate. As prepared, the S1r would express about 0.4 wt.% potassium chloride, about 0.006 wt.% lactic acid, and about 0.05 wt.% potassium citrate.

Reduced sodium sample S2r contained about 0.9 wt.% potassium chloride, about 0.012 wt.% lactic acid, and about 0.1 wt.% potassium citrate. As prepared, the S1r would express about 0.45 wt.% potassium chloride, about 0.006 wt.% lactic acid, and about 0.05 wt.% potassium citrate.

Reduced sodium sample S3r contained about 1.0 wt.% potassium chloride, about 0.012 wt.% lactic acid, and about 0.2 wt.% potassium citrate. As prepared, the S1r would express about 0.5 wt.% potassium chloride, about 0.006 wt.% lactic acid, and about 0.1 wt.% potassium citrate.

Products were tasted and evaluated by blind inspection by a group of about 15 people. Reduced sodium (480 mg) samples containing salt enhancer compositions according to various embodiments of the present invention were found to have salt impact similar to the full sodium product despite 46% less sodium.

### 3. Use of salt-taste enhancing potassium salt compositions in food products

The salt-taste enhancing compositions of the present invention may be employed in formulating processed foodstuffs such as to reduce their sodium levels without substantially diminishing flavor. Methods for reformulating foodstuffs, in various embodiments, involve adjusting the amount of sodium chloride in foodstuffs to a desired lower level, and adding at least one composition according to an embodiment of the present invention, as described in the preceding sections, in order to maintain a pleasantly salty flavor. The sodium content may be reduced by a certain amount, e.g., by 25 % (the FDA minimum for applying the label "reduced sodium"). Alternatively, the sodium level in the reformulated foodstuff may be set to a certain maximum amount. These maximum amounts may be chosen to correspond to amounts (measured in mg) per reference amount of foodstuff specified in FDA product labeling regulations: In this way, a maximum amount of sodium per serving size may be established. For example, and as per U.S. food regulations, a maximum of 600 mg sodium per serving is allowed for the label "healthy" in meal-type products, 480 mg sodium for the label "healthy" in non meal-type products, 140 mg sodium for the label "low-sodium," 35 mg sodium for the label "very low-sodium," and 5 mg sodium for the label "sodium-free." The applicable reference amount (i.e., serving size) depends on the type of food product. Reference amounts for a large variety of customary food products are in accordance with FDA food labeling regulations and 21 CFR 101.12(b) and 101.9(b).

By way of example, but without limitation, food product categories and their reference amounts (in parenthesis), wherein embodiments of the invention may be advantageously used include: (1) bakery products (reference amount 30-125 g) such as fresh bread and rolls, frozen bread or dough, refrigerated dough or biscuit dough, frozen pizza, refrigerated pizza or other pizza products, canned bread, (2) dairy products (reference amount 5-110 g) such as natural cheese, processed cheese, (3) soups (245 g), (4) sauces, gravies, dips and salsa (reference amount 5-125 g) such as spaghetti or Italian sauce, Mexican sauce, Mexican foods such as salsa, gravy or sauce mixes, refrigerated salad dressing (5) meat and meat products (reference amount 15-140 g) luncheon meats, canned meat, (6) salads (reference amount 100-140 g) such as refrigerated salad or coleslaw, (7) mixed dishes (reference amount 1 cup or 140-190 g) such as pot pies, refrigerated entrees, dry packaged dinners, shelf-stable dinners, refrigerated lunches, frozen side dishes, refrigerated side dishes, rice, (8) cereal products (reference amount 15-140 g) such as stuffing mixes, refrigerated pasta, frozen pasta, (9) vegetables (30 to 240 g) such as tomato products, (10) legumes (reference amount 35-130 g) such as baked beans, (11) snacks (reference amount 30 g) such as chips, pretzels, popcorn, extruded snack, and (12) beverage products (240 ml).
Features of the invention are given in the following enumerated paragraphs ("para").
1. A method for manufacturing a processed foodstuff having a reduced sodium content with similar salt perception compared with a previous formulation of the foodstuff, the method comprising:
   (a) providing an adjusted amount of sodium chloride in a reformulated foodstuff, said adjusted amount of sodium chloride being less than an amount of sodium chloride used in a previous formulation of the foodstuff;
   (b) providing potassium chloride to the reformulated foodstuff;
   (c) providing a monophosphate salt to the reformulated foodstuff, said monophosphate salt comprising a member selected from the group consisting of monopotassium phosphate and monocalcium phosphate; and
   (d) providing in the reformulated processed foodstuff one or more members selected from the group consisting of potassium citrate, dipotassium phosphate, tripotassium phosphate, tetrapotassium phosphate, potassium lactate, potassium acetate, potassium tartarate, and potassium formate.
2. The method of para 1, wherein step (d) comprises providing potassium citrate.
3. The method of para 1, wherein said adjusted amount of sodium chloride is at least 25 % less, on a weight basis, than the amount of sodium chloride used in the previous formulation.
4. The method of para 1, wherein said reformulated foodstuff contains, or, if labeled instructions require dilution, said foodstuff following dilution per labeled instructions contains, no greater than 900 mg sodium per reference amount of said foodstuff.
5. The method of para 1, wherein said reformulated foodstuff contains, or, if labeled instructions require dilution, said foodstuff following dilution per labeled instructions contains, no greater than 600 mg sodium per reference amount of said foodstuff.
6. The method of para 1, wherein said reformulated foodstuff contains, or, if labeled instructions require dilution, said foodstuff following dilution per labeled instructions contains, no greater than 480 mg sodium per reference amount of said foodstuff.
7. The method of para 6, wherein said foodstuff is a soup and wherein said reference amount of said foodstuff is 245 g.
8. The method of para 1, wherein said reformulated foodstuff contains, or, if labeled instructions require dilution, said foodstuff following dilution per labeled instructions contains, no greater than 140 mg sodium per reference amount of said foodstuff.
9. The method of para 1, wherein said reformulated foodstuff contains, or, if labeled instructions require dilution, said foodstuff following dilution per labeled instructions contains, no greater than 35 mg sodium per reference amount of said foodstuff.
10. The method of para 1, wherein said reformulated foodstuff contains, or, if labeled instructions require dilution, said foodstuff following dilution per labeled instructions contains, no greater than 5 mg sodium per reference amount of said foodstuff.
11. The method of para 1, wherein step (c) comprises providing from about 0.003 to about 1 part monophosphate salt per 1.0 part potassium chloride provided in step (b).
12. The method of para 1, wherein step (c) comprises providing from about 0.015 to about 0.33 part monophosphate salt per 1.0 part potassium chloride provided in step (b).
13. The method of para 1, wherein step (c) comprises providing from about 0.01 to about 0.25 part monophosphate salt per 1.0 part potassium chloride provided in step (b).
14. The method of para 1, wherein step (d) comprises providing from about 0.01 to about 1.0 part potassium citrate per 1.0 part potassium chloride provided in step (b).
15. The method of para 1, wherein step (d) comprises providing from about 0.05 to about 0.75 part potassium citrate per 1.0 part potassium chloride provided in step (b).
16. The method of para 1, wherein step (d) comprises providing from about 0.05 to about 0.5 part potassium citrate per 1.0 part potassium chloride provided in step (b).
17. The method of para 1 wherein said reformulated foodstuff is a soup, a beverage, a sauce, a bakery product, a dairy product, or a meat product.
18. The method of para 1 wherein said foodstuff is a soup.
19. A method for preparing a foodstuff, the method comprising:
   providing from about 0.2 to about 1.5 wt.% (based the total weight of said foodstuff) potassium chloride, from about 0.002 to about 0.4 wt.% of at least one of monocalcium phosphate and monopotassium phosphate, and from about 0.01 to about 0.6 wt.% potassium citrate.
20. A processed foodstuff formulated for reduced sodium content with enhanced salt perception, said foodstuff comprising:
   (a) potassium chloride in an amount from about 0.2 to about 1.5 wt.%;
   (b) monophosphate salt in an amount from about 0.002 to about 0.4 wt.%, said monophosphate salt comprising a member selected from the group consisting of monopotassium phosphate and monocalcium phosphate;
   (c) a potassium agent in an amount from about 0.01 to about 0.6 wt.% , said potassium agent comprising one or more members selected from the group consisting of potassium citrate, dipotassium phosphate, tripotassium phosphate, tetrapotassium phosphate, potassium lactate, potassium acetate, potassium tartarate, and potassium formate;
      and, optionally,
   (d) sodium chloride.
21. The processed foodstuff of para 20 comprising:
   (a) potassium chloride in an amount from about 0.25 to about 1.2 wt.%;
   (b) monophosphate salt in an amount from about 0.0075 to about 0.05 wt.%, said monophosphate salt comprising a member selected from the group consisting of monopotassium phosphate and monocalcium phosphate;
   (c) a potassium agent in an amount from about 0.025 to about 0.4 wt.%, said potassium agent comprising a member selected from the group consisting of potassium citrate, dipotassium phosphate, tripotassium phosphate, tetrapotassium phosphate, potassium lactate, potassium acetate, potassium tartarate, and potassium formate;
      and, optionally,
   (d) sodium chloride.
22. The processed foodstuff of para 21, said potassium agent comprising potassium citrate.
23. The processed foodstuff of para 20, said foodstuff containing, or, if labeled instructions require dilution, said foodstuff following dilution per labeled instructions containing, no greater than 900 mg sodium per reference amount of said foodstuff.
24. The processed foodstuff of para 20, said foodstuff containing, or, if labeled instructions require dilution, said foodstuff following dilution per labeled instructions containing, no greater than 600 mg sodium per reference amount of said foodstuff.
25. The processed foodstuff of para 20, said foodstuff containing, or, if labeled instructions require dilution, said foodstuff following dilution per labeled instructions containing, no greater than 480 mg sodium per reference amount of said foodstuff.
26. The processed foodstuff of para 20, said foodstuff containing, or, if labeled instructions require dilution, said foodstuff following dilution per labeled instructions containing, no greater than 140 mg sodium per reference amount of said foodstuff.
27. The processed foodstuff of para 20, said foodstuff containing, or, if labeled instructions require dilution, said foodstuff following dilution per labeled instructions containing, no greater than 35 mg sodium per reference amount of said foodstuff.
28. The processed foodstuff of para 20, said foodstuff containing, or, if labeled instructions require dilution, said foodstuff following dilution per labeled instructions containing, no greater than 5 mg sodium per reference amount of said foodstuff.
29. The processed foodstuff of para 20, said foodstuff further comprising about 0.005 to about 5 wt.% sodium chloride.
30. The processed foodstuff of para 20, said foodstuff further comprising about 0.1 to about 1 wt.% sodium chloride.
31. The processed foodstuff of para 20, wherein said foodstuff is a soup, a beverage, a sauce, a bakery product, a dairy product, or a meat product.
32. The processed foodstuff of para 20, wherein said foodstuff is a soup having a mass of 245 g.
33. A salt taste enhancing blend comprising:
   (a) potassium chloride in an amount from about 33 to about 98 wt.% by weight of total of components (a), (b), and (c);
   (b) monophosphate salt in an amount from about 1 to about 33 wt.% by weight of total of components (a), (b), and (c), said monophosphate salt comprising a member selected from the group consisting of monopotassium phosphate and monocalcium phosphate;
   (c) a potassium agent in an amount from about 4 to about 33 wt.% by weight of total of components (a), (b), and (c), said potassium salt comprising a member selected from the group consisting of potassium citrate, dipotassium phosphate, tripotassium phosphate, tetrapotassium phosphate, potassium lactate, potassium acetate, potassium tartarate, and potassium formate.
34. The salt taste enhancing blend of para 33, wherein said potassium agent comprises potassium citrate.
35. The salt taste enhancing blend of para 33, said blend comprising
   (a) said potassium chloride in an amount from about 60 to about 97 wt.%;
   (b) said monophosphate salt in an amount from about 1.5 to about 20 wt.%, and
   (c) said potassium agent in an amount from about 4 to about 20 wt.%.
36. The salt taste enhancing blend of para 33, said blend comprising
   (a) said potassium chloride in an amount from about 90 to about 95 wt.%;
   (b) said monophosphate salt in an amount from about 1 to about 2.5 wt.%, and
   (c) said potassium agent in an amount from about 4 to about 7.5 wt.%.
37. The salt taste enhancing blend of para 33, further comprising:
   (d) sodium chloride.
38. The salt taste enhancing blend of para 33, comprising sodium chloride in an amount of up to about 80 % by weight of total of components (a), (b), (c), and (d).
39. A method for manufacturing a processed foodstuff having a reduced sodium content with similar salt perception compared with a previous formulation of the foodstuff, the method comprising:
   (a) providing an adjusted amount of sodium chloride in a reformulated foodstuff, said adjusted amount of sodium chloride being less than an amount of sodium chloride used in a previous formulation of the foodstuff;
   (b) providing potassium chloride to the reformulated foodstuff;
   (c) providing organic acid comprising at least one of lactic acid, malic acid, citric acid, tartaric acid, succinic acid, acetic acid, formic acid, fumaric acid, adipic acid, gluconic acid, and pyruvic acid; and
   (d) *optionally* providing a potassium agent to the reformulated foodstuff, said potassium salt comprising at least one of potassium citrate, dipotassium phosphate, tripotassium phosphate, tetrapotassium phosphate, potassium lactate, potassium acetate, potassium tartarate, and potassium formate.
40. The method of para 39, wherein said potassium agent comprises potassium citrate.
41. The method of para 39, wherein said organic acid comprises lactic acid.
42. The method of para 39, wherein said adjusted amount of sodium chloride is at least 25 % less, on a weight basis, than the amount of sodium chloride used in the previous formulation.
43. The method of para 39, wherein said reformulated foodstuff contains, or, if labeled instructions require dilution, said foodstuff following dilution per labeled instructions contains, no greater than 900 mg sodium per reference amount of said foodstuff.
44. The method of para 39, wherein said reformulated foodstuff contains, or, if labeled instructions require dilution, said foodstuff following dilution per labeled instructions contains, no greater than 600 mg sodium per reference amount of said foodstuff.
45. The method of para 39, wherein said reformulated foodstuff contains, or, if labeled instructions require dilution, said foodstuff following dilution per labeled instructions contains, no greater than 480 mg sodium per reference amount of said foodstuff.
46. The method of para 39, wherein said foodstuff is a soup and wherein said reference amount of said foodstuff is 245 g.
47. The method of para 39, wherein said reformulated foodstuff contains, or, if labeled instructions require dilution, said foodstuff following dilution per labeled instructions contains, no greater than 140 mg sodium per reference amount of said foodstuff.
48. The method of para 39, wherein said reformulated foodstuff contains, or, if labeled instructions require dilution, said foodstuff following dilution per labeled instructions contains, no greater than 35 mg sodium per reference amount of said foodstuff.
49. The method of para 39, wherein said reformulated foodstuff contains, or, if labeled instructions require dilution, said foodstuff following dilution per labeled instructions contains, no greater than 5 mg sodium per reference amount of said foodstuff.
50. The method of para 39, wherein step (c) comprises providing from about 0.001 to about 0.5 part of said organic acid per 1.0 part potassium chloride provided in step (b).
51. The method of para 39, wherein step (c) comprises providing from about 0.001 to about 0.05 part organic acid per 1.0 part potassium chloride provided in step (b).
52. The method of para 39, wherein step (d) comprises providing from about 0.01 to about 1.0 part potassium citrate per 1.0 part potassium chloride provided in step (b).
53. The method of para 39, wherein step (d) comprises providing from about 0.05 to about 0.75 part potassium citrate per 1.0 part potassium chloride provided in step (b).
54. The method of para 39, wherein step (d) comprises providing from about 0.05 to about 0.5 part potassium citrate per 1.0 part potassium chloride provided in step (b).
55. The method of para 39 wherein said reformulated foodstuff is a soup, a beverage, a sauce, a bakery product, a dairy product, or a meat product.
56. The method of para 55 wherein said foodstuff is a soup.
57. A method for preparing a foodstuff, the method comprising:
   providing from about 0.2 to about 1.5 wt.% (based the total weight of said foodstuff) potassium chloride, from about 0.002 to about 0.4 wt.% of at least one of lactic acid, malic acid, citric acid, tartaric acid, succinic acid, acetic acid, formic acid, fumaric acid, adipic acid, gluconic acid, and pyruvic acid, and from about 0.01 to about 0.6 wt.% potassium citrate.
58. A processed foodstuff formulated for reduced sodium content with enhanced salt perception, comprising:
   (a) potassium chloride in an amount from about 0.2 to about 1.5 wt.%;
   (b) organic acid in an amount from about 0.001 to about 0.2 wt.%, said organic acid comprising a member selected from the group consisting of lactic acid, malic acid, citric acid, tartaric acid, succinic acid, acetic acid, formic acid, fumaric acid, adipic acid, gluconic acid, and pyruvic acid;
   (c) optionally, a potassium agent in an amount from about 0.01 to about 0.6 wt.% , said potassium agent comprising one or more members selected from the group consisting of potassium citrate, dipotassium phosphate, tripotassium phosphate, tetrapotassium phosphate, potassium lactate, potassium acetate, potassium tartarate, and potassium formate;
      and, optionally,
   (d) sodium chloride.
59. The processed foodstuff of para 58 comprising:
   (a) potassium chloride in an amount from about 0.25 to about 1.2 wt.%;
   (b) organic acid in an amount from about 0.002 to about 0.1 wt.%;
   (c) an potassium agent in an amount from about 0.03 to about 0.4 wt.%, said potassium agent comprising potassium citrate.
60. The foodstuff of para 58, said foodstuff further comprising from about 0.005 to about 5 wt.% sodium chloride.
61. The foodstuff of para 58, said foodstuff further comprising from about 0.1 to about 1 wt.% sodium chloride.
62. The processed foodstuff of para 58, said foodstuff containing, or, if labeled instructions require dilution, said foodstuff following dilution per labeled instructions containing, no greater than 900 mg sodium per reference amount of said foodstuff.
63. The processed foodstuff of para 58, said foodstuff containing, or, if labeled instructions require dilution, said foodstuff following dilution per labeled instructions containing, no greater than 600 mg sodium per reference amount of said foodstuff.
64. The processed foodstuff of para 58, said foodstuff containing, or, if labeled instructions require dilution, said foodstuff following dilution per labeled instructions containing, no greater than 480 mg sodium per reference amount of said foodstuff.
65. The processed foodstuff of para 58, said foodstuff containing, or, if labeled instructions require dilution, said foodstuff following dilution per labeled instructions containing, no greater than 140 mg sodium per reference amount of said foodstuff.
66. The processed foodstuff of para 58, said foodstuff containing, or, if labeled instructions require dilution, said foodstuff following dilution per labeled instructions containing, no greater than 35 mg sodium per reference amount of said foodstuff.
67. The processed foodstuff of para 58, said foodstuff containing, or, if labeled instructions require dilution, said foodstuff following dilution per labeled instructions containing, no greater than 5 mg sodium per reference amount of said foodstuff.
68. The processed foodstuff of para 58, wherein said foodstuff is a soup, a beverage, a sauce, a bakery product, a dairy product, or a meat product.
69. The processed foodstuff of para 58, wherein said foodstuff is a soup having a mass of 245 g.
70. A salt taste enhancing blend comprising:
   (a) potassium chloride in an amount from about 95.2 to about 99.9 wt.% by weight of total of components (a) and (b); and
   (b) organic acid in an amount from about 0.1 to about 4.8 wt.% by weight of total of components (a) and (b), said organic acid comprising one or more members selected from the group consisting of lactic acid, malic acid, citric acid, tartaric acid, succinic acid, acetic acid, formic acid, fumaric acid, adipic acid, gluconic acid, and pyruvic acid.
71. A salt taste enhancing blend comprising:
   (a) potassium chloride in an amount from about 55.8 to about 96.6 wt.% by weight of total of components (a), (b), and (c);
   (b) organic acid in an amount from about 0.1 to about 4.8 wt.% by weight of total of components (a), (b), and (c); and
   (c) a potassium agent in an amount from about 3.3 to about 39.4 wt.% by weight of total of components (a), (b), and (c), said potassium agent comprising at least one of potassium citrate, potassium lactate, potassium acetate, potassium tartarate, and/or potassium formate.
72. The salt blend of para 71 comprising:
   (a) said potassium chloride in an amount from about 90.0 to about 95 wt.% by weight of total of components (a), (b), and (c);
   (b) said organic acid in an amount from about 0.1 to about 2.5 wt.% by weight of total of components (a), (b), and (c); and
   (c) said potassium agent in an amount from about 4.9 to about 7.5 wt.% by weight of total of components (a), (b), and (c).
73. The salt taste enhancing blend of para 72, wherein said potassium agent comprises potassium citrate.
74. A processed foodstuff formulated for reduced sodium content with enhanced salt perception, said foodstuff comprising:
   (a) sodium ions at a concentration from about 0.8 to about 1000 mmol/l;
   (b) potassium ions at a concentration from about 20 to about 340 mmol/l;
   (c) chloride ions at a concentration from about 20 to about 1150 mmol/l;
   (d) phosphate ions at a concentration from about 0.1 to about 40 mmol/l; and
   (e) citrate ions at a concentration from about 0.1 to about 40 mmol/l.
75. The foodstuff of para 74 wherein said sodium ions are at a concentration from about 1.5 to about 800 mmol/l; said potassium ions are at a concentration from about 30 to about 270 mmol/l; said chloride ions are at a concentration from about 30 to about 1000 mmol/l; said phosphate ions are at a concentration from about 0.3 to about 10 mmol/l; and said citrate ions are at a concentration from about 1 to about 25 mmol/l.
76. The food stuff of para 74, wherein said sodium ions at a concentration from about 20 to about 410 mmol/l; said potassium ions are at a concentration from about 30 to about 270 mmol/l; said chloride ions are at a concentration from about 40 to about 600 mmol/l; said phosphate ions are at a concentration from about 0.3 to about 10 mmol/l; and said citrate ions are at a concentration from about 1 to about 25 mmol/l.
77. The food stuff of para 74, wherein said sodium ions are at a concentration from about 130 to about 200 mmol/l; said potassium ions are at a concentration from about 80 to about 170 mmol/l; said chloride ions are at a concentration from about 200 to about 300 mmol/l; said phosphate ions are at a concentration from about 1.0 to about 3.0 mmol/l; and said citrate ions are at a concentration from about 3 to about 20 mmol/l.
78. A foodstuff comprising a ratio of sodium ions to potassium ions from about 0.07:1 to about 14:1; a ratio of sodium ions to chloride ions from about 0.03:1 to about 10:1; a ratio of sodium ions to phosphate ions from about 2:1 to about 1365:1; and a ratio of sodium ions to citrate ions from about 0.8:1 to about 410:1.
79. The foodstuff of para 78, wherein said ratio of sodium ions to potassium ions is from about 0.65:1 to about 2.5:1; said ratio of sodium ions to chloride ions is from about 0.3:1 to about 1:1; said ratio of sodium ions to phosphate ions is from about 43.1:1 1 to about 200:1; and said ratio of sodium ions to citrate ions is from about 6.5:1 to about 67:1.
80. A processed foodstuff formulated for reduced sodium content with enhanced salt perception, said foodstuff comprising:
   (a) sodium ions at a concentration from about 0.8 to about 1000 mmol/l; potassium ions at a concentration from about 20 to about 340 mmol/l;
   (b) chloride ions at a concentration from about 20 to about 1150 mmol/l;
   (c) lactate ions at a concentration from about 0.1 to about 30 mmol/l; and
   (d) citrate ions at a concentration from about 0.1 to about 40 mmol/l.
81. The foodstuff of para 80, wherein said sodium ions are at a concentration from about 1.5 to about 800 mmol/l; said potassium ions are at a concentration from about 30 to about 270 mmol/l; said chloride ions are at a concentration from about 30 to about 1000 mmol/l; said lactate ions are at a concentration from about 0.1 to about 15 mmol/l; and said citrate ions are at a concentration from about 1 to about 25 mmol/l.
82. The foodstuff of para 80, wherein said sodium ions are at a concentration from about 20 to about 410 mmol/l; said potassium ions are at a concentration from about 30 to about 270 mmol/l; said chloride ions are at a concentration from about 40 to about 600 mmol/l; said lactate ions are at a concentration from about 0.1 to about 15 mmol/l; and said citrate ions are at a concentration from about 1 to about 25 mmol/l.
83. The foodstuff of para 80, wherein said sodium ions are at a concentration from about 130 to about 200 mmol/l; said potassium ions are at a concentration from about 80 to about 200 mmol/l; said chloride ions are at a concentration from about 200 to about 400 mmol/l; said lactate ions are at a concentration from about 1.0 to about 2 mmol/l; and said citrate ions are at a concentration from about 5 to about 10 mmol/l.
84. A foodstuff comprising ratio of sodium ions to potassium ions from about 0.07:1 to about 14:1; a ratio of sodium ions to chloride ions from about 0.03:1 to about 10:1; a ratio of sodium ions to lactate ions from about 1.3:1 to about 4100:1; and a ratio of sodium ions to citrate ions from about 0.8:1 1 to about 410:1.
85. The foodstuff of para 84, wherein said ratio of sodium ions to potassium ions is about 0.65:1 to about 2.5:1; said ratio sodium ions to chloride ions is in a range of about 0.3:1 to about 1:1; said ratio of sodium ions to lactate ions is about 65:1 1 to about 200:1; and said ratio of sodium ions to citrate ions is about 6.5:1 to about 67:1.

## Claims

1. A method for manufacturing a processed foodstuff having a reduced sodium content with similar salt perception compared with a previous formulation of the foodstuff, the method comprising:
a) providing an adjusted amount of sodium chloride in a reformulated foodstuff, said adjusted amount of sodium chloride being less than an amount of sodium chloride used in a previous formulation of the foodstuff;
b) providing potassium chloride to the reformulated foodstuff;
c) providing organic acid comprising at least one of lactic acid, malic acid, citric acid, tartaric acid, succinic acid, acetic acid, formic acid, fumaric acid, adipic acid, gluconic acid, and pyruvic acid; and
d) *optionally* providing a potassium agent to the reformulated foodstuff, said potassium salt comprising at least one of potassium citrate, dipotassium phosphate, tripotassium phosphate, tetrapotassium phosphate, potassium lactate, potassium acetate, potassium tartarate, and potassium formate.

2. The method of claim 1, wherein said potassium agent comprises potassium citrate.

3. The method of claim 1, wherein said organic acid comprises lactic acid.

4. The method of claim 39, wherein said adjusted amount of sodium chloride is at least 25 % less, on a weight basis, than the amount of sodium chloride used in the previous formulation.

5. The method of claim 1, wherein said reformulated foodstuff contains, or, if labeled instructions require dilution, said foodstuff following dilution per labeled instructions contains:
a) no greater than 900 mg sodium per reference amount of said foodstuff;
b) no greater than 600 mg sodium per reference amount of said foodstuff;
c) no greater than 480 mg sodium per reference amount of said foodstuff;
d) no greater than 140 mg sodium per reference amount of said foodstuff;
e) no greater than 35 mg sodium per reference amount of said foodstuff;
or
f) no greater than 5 mg sodium per reference amount of said foodstuff.

6. The method of claim 1, wherein step c) comprises:
a) providing from about 0.001 to about 0.5 part of said organic acid per 1.0 part potassium chloride provided in step b); or
b) comprises providing from about 0.001 to about 0.05 part organic acid per 1.0 part potassium chloride provided in step b).

7. The method of claim 1, wherein step d) comprises:
a) providing from about 0.01 to about 1.0 part potassium citrate per 1.0 part potassium chloride provided in step b);
b) providing from about 0.05 to about 0.75 part potassium citrate per 1.0 part potassium chloride provided in step b);
c) providing from about 0.05 to about 0.5 part potassium citrate per 1.0 part potassium chloride provided in step b).

8. The method of claim 1 wherein said reformulated foodstuff is:
a) selected from a soup, a beverage, a sauce, a bakery product, a dairy product, or a meat product; or
b) a soup; or
c) a soup and wherein said reference amount of said foodstuff is 245 g.

9. A method for preparing a foodstuff, the method comprising:
providing from about 0.2 to about 1.5 wt. % (based the total weight of said foodstuff) potassium chloride, from about 0.002 to about 0.4 wt. % of at least one of lactic acid, malic acid, citric acid, tartaric acid, succinic acid, acetic acid, formic acid, fumaric acid, adipic acid, gluconic acid, and pyruvic acid, and from about 0.01 to about 0.6 wt. % potassium citrate.

10. A processed foodstuff formulated for reduced sodium content with enhanced salt perception, comprising:
a) potassium chloride in an amount from about 0.2 to about 1.5 wt. %;
b) organic acid in an amount from about 0.001 to about 0.2 wt. %, said organic acid comprising a member selected from the group consisting of lactic acid, malic acid, citric acid, tartaric acid, succinic acid, acetic acid, formic acid, fumaric acid, adipic acid, gluconic acid, and pyruvic acid;
c) optionally, a potassium agent in an amount from about 0.01 to about 0.6 wt. %, said potassium agent comprising one or more members selected from the group consisting of potassium citrate, dipotassium phosphate, tripotassium phosphate, tetrapotassium phosphate, potassium lactate, potassium acetate, potassium tartarate, and potassium formate;
and, optionally,
d) sodium chloride.

11. The processed foodstuff of claim 10 comprising:
a) potassium chloride in an amount from about 0.25 to about 1.2 wt. %;
b) organic acid in an amount from about 0.002 to about 0.1 wt.%;
c) an potassium agent in an amount from about 0.03 to about 0.4 wt. %, said potassium agent comprising potassium citrate.

12. The foodstuff of claim 10, said foodstuff further comprising:
a) from about 0.005 to about 5 wt. % sodium chloride;
b) from about 0.1 to about 1 wt. % sodium chloride.

13. The processed foodstuff of claim 10, said foodstuff containing, or, if labeled instructions require dilution, said foodstuff following dilution per labeled instructions containing;
a) no greater than 900 mg sodium per reference amount of said foodstuff;
b) no greater than 600 mg sodium per reference amount of said foodstuff;
c) no greater than 480 mg sodium per reference amount of said foodstuff;
d) no greater than 140 mg sodium per reference amount of said foodstuff;
e) no greater than 35 mg sodium per reference amount of said foodstuff;
f) no greater than 5 mg sodium per reference amount of said foodstuff.

14. The processed foodstuff of claim 10, wherein said foodstuff is:
a) selected from a soup, a beverage, a sauce, a bakery product, a dairy product, or a meat product;
b) a soup having a mass of 245 g.

15. A salt taste enhancing blend comprising one of:
(i)
a) potassium chloride in an amount from about 95.2 to about 99.9 wt. % by weight of total of components a) and b); and
b) organic acid in an amount from about 0.1 to about 4.8 wt. % by weight of total of components a) and b), said organic acid comprising one or more members selected from the group consisting of lactic acid, malic acid, citric acid, tartaric acid, succinic acid, acetic acid, formic acid, fumaric acid, adipic acid, gluconic acid, and pyruvic acid; or
(ii)
a) potassium chloride in an amount from about 55.8 to about 96.6 wt. % by weight of total of components a), b), and c);
b) organic acid in an amount from about 0.1 to about 4.8 wt. % by weight of total of components a), b), and c); and
c) a potassium agent in an amount from about 3.3 to about 39.4 wt. % by weight of total of components a), b), and c), said potassium agent comprising at least one of potassium citrate, potassium lactate, potassium acetate, potassium tartarate, and/or potassium formate; or
and optionally wherein said potassium agent comprises potassium citrate.
(iii)
a) said potassium chloride in an amount from about 90.0 to about 95 wt. % by weight of total of components a), b), and c);
b) said organic acid in an amount from about 0.1 to about 2.5 wt. % by weight of total of components a), b), and c); and
c) said potassium agent in an amount from about 4.9 to about 7.5 wt. % by weight of total of components a), b), and c);
